# EUROPÄISCHE PATENTANMELDUNG

(11) **EP 3 267 658 A1**
(43) Veröffentlichungstag der Anmeldung: **10.01.2018**
(21) Anmeldenummer: 16178717.1
(22) Anmeldetag: 08.07.2016
(51) Int. Cl.: H04L 29/08, H04L 12/721

(54) **NETZWERKENTITÄT ZUM KOMMUNIZIEREN MIT EINER WEITEREN NETZWERKENTITÄT ÜBER EIN KOMMUNIKATIONSNETZWERK**

(71) Anmelder: Deutsche Telekom AG, 53113 Bonn (DE)
(72) Erfinder: NEUBACHER, Andreas, A-2100 Korneuburg (AT)
(74) Vertreter: Patentship Patentanwaltsgesellschaft mbH

(57) **Zusammenfassung**

Die Erfindung betrifft eine Netzwerkentität (100) zum Kommunizieren mit einer weiteren Netzwerkentität über ein Kommunikationsnetzwerk. Die Netzwerkentität (100) umfasst einen Prozessor (101), welcher ausgebildet ist, Daten bereitzustellen und ein Protokollobjekt zu erzeugen, wobei das Protokollobjekt eine Protokollvorschrift zum Handhaben der Daten durch die weitere Netzwerkentität anzeigt. Der Prozessor (101) ist ferner ausgebildet, die Daten mit dem Protokollobjekt zu verknüpfen, und ein Datenpaket zu erzeugen, wobei das Datenpaket die Daten und das Protokollobjekt umfasst. Die Netzwerkentität (100) umfasst ferner eine Kommunikationsschnittstelle (103), welche ausgebildet ist, das Datenpaket an die weitere Netzwerkentität über das Kommunikationsnetzwerk auszusenden.

## Beschreibung

### TECHNISCHES GEBIET

Die vorliegende Erfindung betrifft das Gebiet der Übertragung von Daten über ein Kommunikationsnetzwerk auf der Basis eines Protokolls.

### TECHNISCHER HINTERGRUND

Zur Übertragung von Daten über ein Kommunikationsnetzwerk werden Schnittstellen zwischen zwei oder mehreren logischen Elementen des Kommunikationsnetzwerkes definiert. Die Schnittstellen werden dabei im Allgemeinen durch zumindest zwei Merkmale beschrieben.

Zum einen wird ein Protokoll definiert, dass wiederum durch sogenannte Information Elements (IEs) bzw. entsprechende Datenfelder, in welchen die Daten transportiert werden, beschrieben wird. Zum anderen erfolgt eine Beschreibung von Prozeduren, welche nach Empfang eines bestimmten Information Elements (IE) oder eines bestimmten Datenfeldes ausgeführt werden.

Beispielsweise kann durch den Empfang eines Datenpakets nach dem Transmission Control Protocol / Internet Protocol (TCP/IP), welches in einem Port-Datenfeld die Nummer 80 aufweist, ein Empfänger darauf schließen, dass es sich um einen Server handelt. Falls es sich ferner um ein Datenpaket nach dem Hypertext Transfer Protocol (HTTP) handelt, kann ein Sender beispielsweise anzeigen, dass Daten von einer Webseite abgefragt werden sollen. Dadurch wird folglich angezeigt, dass die nachfolgenden Datenfelder gemäß einer speziellen Vereinbarung zu lesen und zu interpretieren sind, beispielsweise wie Informationen in einem Browser dargestellt werden sollen.

Diese Vereinbarungen, welche beispielsweise das Vorgehen definieren falls die Nummer 80 in einem Port-Datenfeld steht, wie das Hypertext Transfer Protocol (HTTP) zu verwenden ist, und wie ein Server mit Daten umzugehen hat, wurde vorab in verschiedenen Standardisierungsgremien festgelegt. Im Zuge des Trends zur Virtualisierung, d.h. der Entkopplung von Hardware und Software, sowie der Entkopplung von Laufzeitumgebung (engl. Run-time Environment) und Programmcode, in welcher ein Programm oder eine Funktion programmiert wurde, hat diese beschriebene Vorgehensweise jedoch Nachteile.

Durch das Festlegen von Prozeduren werden beispielsweise die Terminierungspunkte der Protokolle zwangsläufig fixiert. Ferner werden die Prozeduren, das Format und die Vereinbarungen, welche beispielsweise mittels der Information Elements (IEs) eines Protokolls transportiert werden, schon vorab festgelegt.

Dadurch wird beispielsweise die Flexibilität limitiert, Funktionen zwischen Netzwerkknoten oder Netzwerkelementen zu verschieben. Ferner werden die Vorteile einer möglichen Virtualisierung beim Übertragen von Daten nicht vollständig genutzt.

### BESCHREIBUNG DER ERFINDUNG

Es ist daher die Aufgabe der vorliegenden Erfindung, ein effizientes Konzept zum Handhaben von Daten, insbesondere zum Weiterleiten von Daten über ein Kommunikationsnetzwerk oder zum Verarbeiten von Daten, zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch eine Netzwerkentität gelöst werden kann, welche ausgebildet ist, ein Protokollobjekt zu erzeugen, welches eine Protokollvorschrift zum Handhaben von Daten durch eine weitere Netzwerkentität anzeigt. Die Daten können mit dem Protokollobjekt in einem Datenpaket an die weitere Netzwerkentität über ein Kommunikationsnetzwerk ausgesendet werden. Die weitere Netzwerkentität ist ausgebildet, das Datenpaket mit den Daten und dem Protokollobjekt zu empfangen, die Protokollvorschrift auf der Basis des Protokollobjekts zu bestimmen, und die Daten auf der Basis der Protokollvorschrift zu handhaben. Das Handhaben der Daten kann beispielsweise ein Verarbeiten der Daten oder ein Weiterleiten der Daten über das Kommunikationsnetzwerk umfasst.

Das Protokollobjekt kann einen ausführbaren Programmcode umfassen oder durch einen ausführbaren Programmcode gebildet sein, wobei der ausführbare Programmcode durch die weitere Netzwerkentität ausführbar ist. Der ausführbare Programmcode kann in maschinen-lesbarer Form zur Ausführung durch einen Prozessor der weiteren Netzwerkentität bereitgestellt sein. Das Protokollobjekt kann mithin ein Softwareobjekt sein.

Dadurch wird der Vorteil erreicht, dass eine unmittelbare Handhabung der Daten durch die weitere Netzwerkentität unter Verwendung des Protokollobjekts realisiert werden kann. Mithin kann eine flexible Anpassung der Protokollvorschrift ohne Modifikationen der Hardware und/oder Software erfolgen.

Gemäß einem ersten Aspekt betrifft die Erfindung eine Netzwerkentität zum Kommunizieren mit einer weiteren Netzwerkentität über ein Kommunikationsnetzwerk. Die Netzwerkentität umfasst einen Prozessor, welcher ausgebildet ist, Daten bereitzustellen und ein Protokollobjekt zu erzeugen, wobei das Protokollobjekt eine Protokollvorschrift zum Handhaben der Daten durch die weitere Netzwerkentität anzeigt. Der Prozessor ist ferner ausgebildet, die Daten mit dem Protokollobjekt zu verknüpfen, und ein Datenpaket zu erzeugen, wobei das Datenpaket die Daten und das Protokollobjekt umfasst. Die Netzwerkentität umfasst ferner eine Kommunikationsschnittstelle, welche ausgebildet ist, das Datenpaket an die weitere Netzwerkentität über das Kommunikationsnetzwerk auszusenden. Dadurch wird der Vorteil erreicht, dass ein effizientes Konzept zum Handhaben von Daten realisiert werden kann.

Gemäß einer Ausführungsform umfasst die Netzwerkentität ferner einen Speicher, wobei die Daten in dem Speicher vorgespeichert sind. Dadurch wird der Vorteil erreicht, dass die Daten effizient bereitgestellt werden können.

Gemäß einer Ausführungsform umfasst das Protokollobjekt einen ausführbaren Programmcode oder ist durch einen ausführbaren Programmcode gebildet, wobei der ausführbare Programmcode durch die weitere Netzwerkentität ausführbar ist, und wobei der ausführbare Programmcode die Protokollvorschrift zum Handhaben der Daten repräsentiert. Dadurch wird der Vorteil erreicht, dass die Protokollvorschrift durch einen Prozessor der weiteren Netzwerkentität unmittelbar realisiert werden kann. Der ausführbare Programmcode kann in maschinen-lesbarer Form zur Ausführung bereitgestellt sein. Der ausführbare Programmcode kann einen vorkompilierten Objektcode umfassen.

Gemäß einer Ausführungsform ist der Prozessor ausgebildet, den ausführbaren Programmcode und/oder den vorkompilierten Objektcode auf der Basis der Protokollvorschrift zu erzeugen. Dadurch wird der Vorteil erreicht, dass das Protokollobjekt effizient bereitgestellt werden kann.

Gemäß einer Ausführungsform zeigt das Protokollobjekt ferner eine Gültigkeitsdauer des Datenpakets an, wobei die Gültigkeitsdauer einen Zeitraum zum Handhaben der Daten durch die weitere Netzwerkentität anzeigt. Dadurch wird der Vorteil erreicht, dass das Handhaben der Daten durch die weitere Netzwerkentität innerhalb des Zeitraums gewährleistet werden kann.

Gemäß einer Ausführungsform ist der Netzwerkentität ein privater Signaturschlüssel zugeordnet, wobei der Prozessor ausgebildet ist, das Datenpaket auf der Basis des privaten Signaturschlüssels kryptographisch zu signieren. Dadurch wird der Vorteil erreicht, dass die Integrität des Datenpakets, insbesondere des Protokollobjekts, gewährleistet werden kann. Die Signatur kann unter Verwendung einer Public-Key-Infrastruktur erzeugt werden.

Gemäß einer Ausführungsform zeigt das Protokollobjekt ferner eine Autorisierung der weiteren Netzwerkentität zum Handhaben der Daten durch die weitere Netzwerkentität an. Dadurch wird der Vorteil erreicht, dass eine Berechtigung zum Handhaben der Daten angezeigt werden kann. Die Autorisierung der weiteren Netzwerkentität zum Handhaben der Daten kann durch die Netzwerkentität erteilt werden. Die Autorisierung der weiteren Netzwerkentität kann beispielsweise unter Verwendung eines Autorisierungsschlüssels oder eines Autorisierungscodes angezeigt werden.

Gemäß einer Ausführungsform umfasst das Handhaben der Daten ein Verarbeiten der Daten oder ein Weiterleiten der Daten über das Kommunikationsnetzwerk. Dadurch wird der Vorteil erreicht, dass die Daten auf verschiedene Weise gehandhabt werden können.

Gemäß einer Ausführungsform ist die Netzwerkentität ein Netzwerkelement, insbesondere ein Router, ein Multiplexer oder ein Server, des Kommunikationsnetzwerkes. Dadurch wird der Vorteil erreicht, dass die Netzwerkentität effizient implementiert werden kann.

Gemäß einem zweiten Aspekt betrifft die Erfindung eine Netzwerkentität zum Handhaben von Daten auf der Basis einer Protokollvorschrift, wobei die Netzwerkentität ausgebildet ist, mit einer weiteren Netzwerkentität über ein Kommunikationsnetzwerk zu kommunizieren. Die Netzwerkentität umfasst eine Kommunikationsschnittstelle, welche ausgebildet ist, ein Datenpaket von der weiteren Netzwerkentität über das Kommunikationsnetzwerk zu empfangen, wobei das Datenpaket die Daten und ein Protokollobjekt umfasst, und wobei das Protokollobjekt die Protokollvorschrift zum Handhaben der Daten anzeigt. Die Netzwerkentität umfasst ferner einen Prozessor, welcher ausgebildet ist, die Protokollvorschrift auf der Basis des Protokollobjekts zu bestimmen, und die Daten auf der Basis der Protokollvorschrift zu handhaben. Dadurch wird der Vorteil erreicht, dass ein effizientes Konzept zum Handhaben von Daten realisiert werden kann.

Die Netzwerkentität gemäß dem ersten Aspekt der Erfindung und die Netzwerkentität gemäß dem zweiten Aspekt der Erfindung können zusammenwirken. Die Netzwerkentität gemäß dem zweiten Aspekt der Erfindung kann die weitere Netzwerkentität gemäß dem ersten Aspekt der Erfindung sein. Die weitere Netzwerkentität gemäß dem zweiten Aspekt der Erfindung kann die Netzwerkentität gemäß dem ersten Aspekt der Erfindung sein.

Gemäß einer Ausführungsform umfasst das Protokollobjekt einen ausführbaren Programmcode oder ist durch einen ausführbaren Programmcode gebildet, wobei der ausführbare Programmcode die Protokollvorschrift zum Handhaben der Daten repräsentiert, und wobei der Prozessor ausgebildet ist, den ausführbaren Programmcode auszuführen. Dadurch wird der Vorteil erreicht, dass die Protokollvorschrift durch den Prozessor der Netzwerkentität unmittelbar realisiert werden kann. Der ausführbare Programmcode kann in maschinen-lesbarer Form zur Ausführung bereitgestellt sein.

Gemäß einer Ausführungsform umfasst der ausführbare Programmcode einen vorkompilierten Objektcode, wobei der Prozessor ausgebildet ist, den vorkompilierten Objektcode mit vorgespeichertem Objektcode zu linken oder zu binden. Dadurch wird der Vorteil erreicht, dass die Protokollvorschrift durch den Prozessor effizient realisiert werden kann.

Gemäß einer Ausführungsform umfasst die Netzwerkentität einen Speicher, wobei der vorgespeicherte Objektcode in dem Speicher vorgespeichert ist. Dadurch wird der Vorteil erreicht, dass der vorgespeicherte Objektcode effizient bereitgestellt werden kann.

Gemäß einer Ausführungsform ist die Netzwerkentität ausgebildet, eine Laufzeitumgebung zum Ausführen des ausführbaren Programmcodes bereitzustellen, wobei der Prozessor ausgebildet ist, den ausführbaren Programmcode unter Verwendung der Laufzeitumgebung auszuführen. Dadurch wird der Vorteil erreicht, dass eine plattformunabhängige Ausführung des Programmcodes erreicht werden kann. Die Laufzeitumgebung kann vorbestimmte Funktionen mit vorbestimmten Prozeduren, beispielsweise zum Lesen oder Schreiben der Daten, zum Weiterleiten der Daten oder zum Verarbeiten der Daten, bereitstellen.

Gemäß einer Ausführungsform zeigt das Protokollobjekt ferner eine Gültigkeitsdauer des Datenpakets an, wobei die Gültigkeitsdauereinen Zeitraum zum Handhaben der Daten anzeigt, und wobei der Prozessor ausgebildet ist, einen gegenwärtigen Zeitpunkt mit dem Zeitraum zu vergleichen, und die Daten zu handhaben, falls der gegenwärtige Zeitpunkt innerhalb des Zeitraumes liegt. Dadurch wird der Vorteil erreicht, dass das Handhaben der Daten durch die Netzwerkentität innerhalb des Zeitraums gewährleistet werden kann.

Gemäß einer Ausführungsform ist das Datenpaket auf der Basis eines privaten Signaturschlüssels der weiteren Netzwerkentität kryptographisch signiert, wobei der Prozessor ausgebildet ist, die Signatur des Datenpakets auf der Basis eines öffentlichen Signaturprüfschlüssels der weiteren Netzwerkentität zu verifizieren, wobei der private Signaturschlüssel und der öffentliche Signaturprüfschlüssel ein kryptographisches Schlüsselpaar bilden, und wobei der Prozessor ausgebildet ist, die Daten zu handhaben, falls die Signatur des Datenpakets erfolgreich verifiziert ist. Dadurch wird der Vorteil erreicht, dass die Integrität des Datenpakets, insbesondere des Protokollobjekts, gewährleistet sein kann. Die Signatur kann unter Verwendung einer Public-Key-Infrastruktur verifiziert werden.

Gemäß einer Ausführungsform zeigt das Protokollobjekt ferner eine Autorisierung der Netzwerkentität zum Handhaben der Daten durch die Netzwerkentität an, wobei der Prozessor ausgebildet ist, die Autorisierung der Netzwerkentität zu verifizieren, und wobei der Prozessor ferner ausgebildet ist, die Daten zu handhaben, falls die Autorisierung erfolgreich verifiziert ist. Dadurch wird der Vorteil erreicht, dass die Daten durch die Netzwerkentität nur dann gehandhabt werden, wenn die Netzwerkentität zum Handhaben der Daten berechtigt ist. Die Autorisierung der Netzwerkentität zum Handhaben der Daten kann durch die weitere Netzwerkentität erteilt werden. Die Autorisierung der Netzwerkentität kann beispielsweise unter Verwendung eines Autorisierungsschlüssels oder eines Autorisierungscodes verifiziert werden.

Gemäß einer Ausführungsform umfasst das Handhaben der Daten ein Verarbeiten der Daten oder ein Weiterleiten der Daten über das Kommunikationsnetzwerk. Dadurch wird der Vorteil erreicht, dass die Daten auf verschiedene Weise gehandhabt werden können.

Gemäß einer Ausführungsform ist die Netzwerkentität ein Netzwerkelement, insbesondere ein Router, ein Multiplexer oder ein Server, des Kommunikationsnetzwerkes. Dadurch wird der Vorteil erreicht, dass die Netzwerkentität effizient implementiert werden kann.

Gemäß einem dritten Aspekt betrifft die Erfindung ein Kommunikationssystem, mit einer Netzwerkentität nach dem ersten Aspekt der Erfindung, und einer weiteren Netzwerkentität nach dem zweiten Aspekt der Erfindung. Die Netzwerkentität ist ausgebildet, mit der weiteren Netzwerkentität über ein Kommunikationsnetzwerk zu kommunizieren. Die weitere Netzwerkentität ist ausgebildet, Daten auf der Basis einer Protokollvorschrift zu handhaben. Dadurch wird der Vorteil erreicht, dass ein effizientes Konzept zum Handhaben von Daten realisiert werden kann.

Gemäß einer Ausführungsform ist das Kommunikationsnetzwerk ein Kommunikationsnetzwerk der fünften Generation (5G) oder einer weiteren Generation, wobei die Netzwerkentität und die weitere Netzwerkentität einem Subnetzwerk, insbesondere einem Slice, des Kommunikationsnetzwerkes zugeordnet sind. Dadurch wird der Vorteil erreicht, dass eine effiziente Handhabung der Daten über ein Kommunikationsnetzwerk der fünften Generation (5G) oder einer weiteren Generation realisiert werden kann.

Gemäß einem vierten Aspekt betrifft die Erfindung ein Verfahren zum Kommunizieren einer Netzwerkentität mit einer weiteren Netzwerkentität über ein Kommunikationsnetzwerk, wobei die Netzwerkentität einen Prozessor und eine Kommunikationsschnittstelle umfasst. Das Verfahren umfasst ein Bereitstellen von Daten durch den Prozessor, ein Erzeugen eines Protokollobjekts durch den Prozessor, wobei das Protokollobjekt eine Protokollvorschrift zum Handhaben der Daten durch die weitere Netzwerkentität anzeigt, ein Verknüpfen der Daten mit dem Protokollobjekt durch den Prozessor, ein Erzeugen eines Datenpakets durch den Prozessor, wobei das Datenpaket die Daten und das Protokollobjekt umfasst, und ein Aussenden des Datenpakets an die weitere Netzwerkentität über das Kommunikationsnetzwerk durch die Kommunikationsschnittstelle. Dadurch wird der Vorteil erreicht, dass ein effizientes Konzept zum Handhaben von Daten realisiert werden kann.

Das Verfahren kann durch die Netzwerkentität nach dem ersten Aspekt der Erfindung ausgeführt werden. Weitere Merkmale des Verfahrens resultieren unmittelbar aus der Funktionalität und/oder den Merkmalen der Netzwerkentität nach dem ersten Aspekt der Erfindung.

Gemäß einem fünften Aspekt betrifft die Erfindung ein Verfahren zum Handhaben von Daten auf der Basis einer Protokollvorschrift unter Verwendung einer Netzwerkentität, wobei die Netzwerkentität ausgebildet ist, mit einer weiteren Netzwerkentität über ein Kommunikationsnetzwerk zu kommunizieren, und wobei die Netzwerkentität eine Kommunikationsschnittstelle und einen Prozessor umfasst. Das Verfahren umfasst ein Empfangen eines Datenpakets von der weiteren Netzwerkentität über das Kommunikationsnetzwerk durch die Kommunikationsschnittstelle, wobei das Datenpaket die Daten und ein Protokollobjekt umfasst, wobei das Protokollobjekt die Protokollvorschrift zum Handhaben der Daten anzeigt, ein Bestimmen der Protokollvorschrift auf der Basis des Protokollobjekts durch den Prozessor, und ein Handhaben der Daten auf der Basis der Protokollvorschrift durch den Prozessor. Dadurch wird der Vorteil erreicht, dass ein effizientes Konzept zum Handhaben von Daten realisiert werden kann.

Das Verfahren kann durch die Netzwerkentität nach dem zweiten Aspekt der Erfindung ausgeführt werden. Weitere Merkmale des Verfahrens resultieren unmittelbar aus der Funktionalität und/oder den Merkmalen der Netzwerkentität nach dem zweiten Aspekt der Erfindung.

Gemäß einem sechsten Aspekt betrifft die Erfindung ein Computerprogramm zum Ausführen des Verfahrens nach dem vierten Aspekt der Erfindung oder des Verfahrens nach dem fünften Aspekt der Erfindung, wenn das Computerprogramm auf einem Computer ausgeführt wird. Dadurch wird der Vorteil erreicht, dass die Verfahren automatisiert ausgeführt werden können. Die Netzwerkentität nach dem ersten Aspekt der Erfindung und/oder die Netzwerkentität nach dem zweiten Aspekt der Erfindung können programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm einer Netzwerkentität zum Kommunizieren mit einer weiteren Netzwerkentität über ein Kommunikationsnetzwerk;
Fig. 2 ein schematisches Diagramm einer Netzwerkentität zum Handhaben von Daten auf der Basis einer Protokollvorschrift;
Fig. 3 ein schematisches Diagramm eines Kommunikationssystems mit einer Netzwerkentität und einer weiteren Netzwerkentität;
Fig. 4 ein schematisches Diagramm eines Verfahrens zum Kommunizieren einer Netzwerkentität mit einer weiteren Netzwerkentität über ein Kommunikationsnetzwerk;
Fig. 5 ein schematisches Diagramm eines Verfahrens zum Handhaben von Daten auf der Basis einer Protokollvorschrift unter Verwendung einer Netzwerkentität;
Fig. 6 ein schematisches Diagramm eines Kommunikationssystems mit einer Netzwerkentität und einer weiteren Netzwerkentität;
Fig. 7 ein schematisches Diagramm eines Kommunikationssystems mit einer Netzwerkentität und einer weiteren Netzwerkentität; und
Fig. 8 ein schematisches Diagramm eines Kommunikationssystems mit einer Netzwerkentität und einer weiteren Netzwerkentität.

### DETAILIERTE BESCHREIBUNG DER FIGUREN

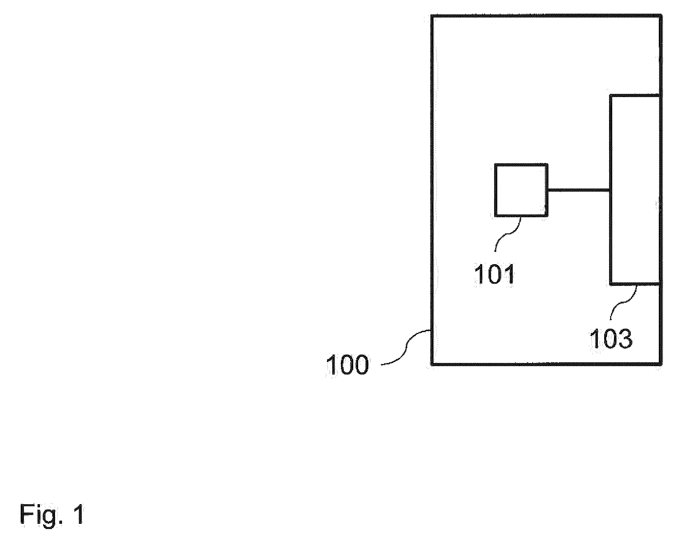

Fig. 1 zeigt ein schematisches Diagramm einer Netzwerkentität 100 zum Kommunizieren mit einer weiteren Netzwerkentität über ein Kommunikationsnetzwerk.

Die Netzwerkentität 100 umfasst einen Prozessor 101, welcher ausgebildet ist, Daten bereitzustellen und ein Protokollobjekt zu erzeugen, wobei das Protokollobjekts eine Protokollvorschrift zum Handhaben der Daten durch die weitere Netzwerkentität anzeigt. Der Prozessor 101 ist ferner ausgebildet, die Daten mit dem Protokollobjekts zu verknüpfen, und ein Datenpaket zu erzeugen, wobei das Datenpaket die Daten und das Protokollobjekt umfasst. Die Netzwerkentität 100 umfasst ferner eine Kommunikationsschnittstelle 103, welche ausgebildet ist, das Datenpaket an die weitere Netzwerkentität über das Kommunikationsnetzwerk auszusenden.

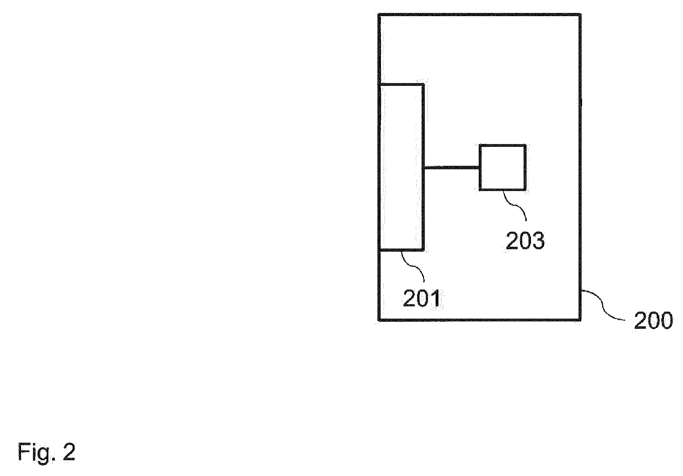

Fig. 2 zeigt ein schematisches Diagramm einer Netzwerkentität 200 zum Handhaben von Daten auf der Basis einer Protokollvorschrift. Die Netzwerkentität 200 ist ausgebildet, mit einer weiteren Netzwerkentität über ein Kommunikationsnetzwerk zu kommunizieren.

Die Netzwerkentität 200 umfasst eine Kommunikationsschnittstelle 201, welche ausgebildet ist, ein Datenpaket von der weiteren Netzwerkentität über das Kommunikationsnetzwerk zu empfangen, wobei das Datenpaket die Daten und ein Protokollobjekt umfasst, und wobei das Protokollobjekt die Protokollvorschrift zum Handhaben der Daten anzeigt. Die Netzwerkentität 200 umfasst ferner einen Prozessor 203, welcher ausgebildet ist, die Protokollvorschrift auf der Basis des Protokollobjekts zu bestimmen, und die Daten auf der Basis der Protokollvorschrift zu handhaben.

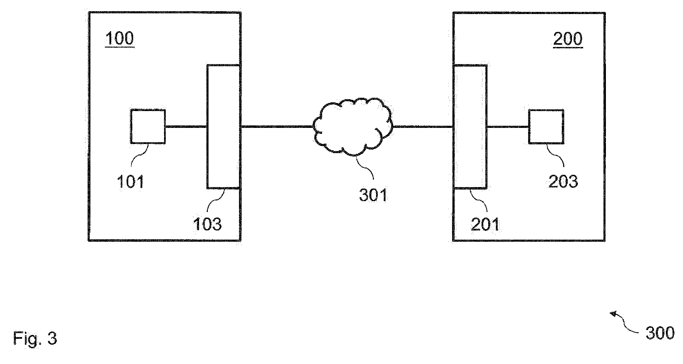

Fig. 3 zeigt ein schematisches Diagramm eines Kommunikationssystems 300 mit einer Netzwerkentität 100 und einer weiteren Netzwerkentität 200. Die Netzwerkentität 100 ist ausgebildet, mit der weiteren Netzwerkentität 200 über ein Kommunikationsnetzwerk 301 zu kommunizieren. Die weitere Netzwerkentität 200 ist ausgebildet, Daten auf der Basis einer Protokollvorschrift zu handhaben.

Die Netzwerkentität 100 umfasst einen Prozessor 101, welcher ausgebildet ist, die Daten bereitzustellen und ein Protokollobjekt zu erzeugen, wobei das Protokollobjekt die Protokollvorschrift zum Handhaben der Daten durch die weitere Netzwerkentität 200 anzeigt. Der Prozessor 101 ist ferner ausgebildet, die Daten mit dem Protokollobjekt zu verknüpfen, und ein Datenpaket zu erzeugen, wobei das Datenpaket die Daten und das Protokollobjekt umfasst. Die Netzwerkentität 100 umfasst ferner eine Kommunikationsschnittstelle 103, welche ausgebildet ist, das Datenpaket an die weitere Netzwerkentität 200 über das Kommunikationsnetzwerk 301 auszusenden.

Die weitere Netzwerkentität 200 umfasst eine Kommunikationsschnittstelle 201, welche ausgebildet ist, das Datenpaket von der Netzwerkentität 100 über das Kommunikationsnetzwerk 301 zu empfangen, wobei das Datenpaket die Daten und das Protokollobjekt umfasst, und wobei das Protokollobjekt die Protokollvorschrift zum Handhaben der Daten anzeigt. Die weitere Netzwerkentität 200 umfasst ferner einen Prozessor 203, welcher ausgebildet ist, die Protokollvorschrift auf der Basis des Protokollobjekts zu bestimmen, und die Daten auf der Basis der Protokollvorschrift zu handhaben.

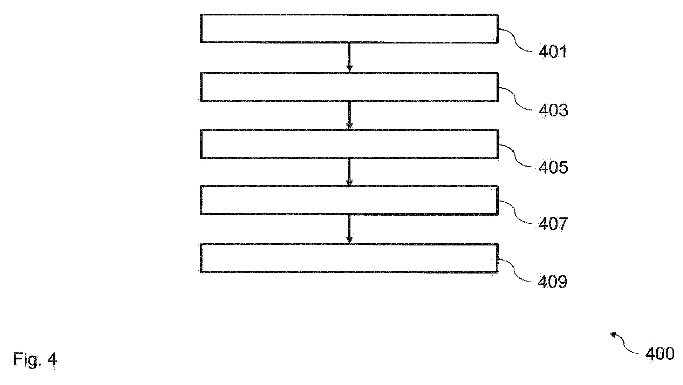

Fig. 4 zeigt ein schematisches Diagramm eines Verfahrens 400 zum Kommunizieren einer Netzwerkentität mit einer weiteren Netzwerkentität über ein Kommunikationsnetzwerk. Die Netzwerkentität umfasst einen Prozessor und eine Kommunikationsschnittstelle.

Das Verfahren 400 umfasst ein Bereitstellen 401 von Daten durch den Prozessor, ein Erzeugen 403 eines Protokollobjekts durch den Prozessor, wobei das Protokollobjekt eine Protokollvorschrift zum Handhaben der Daten durch die weitere Netzwerkentität anzeigt, ein Verknüpfen 405 der Daten mit dem Protokollobjekt durch den Prozessor, ein Erzeugen 407 eines Datenpakets durch den Prozessor, wobei das Datenpaket die Daten und das Protokollobjekt umfasst, und ein Aussenden 409 des Datenpakets an die weitere Netzwerkentität über das Kommunikationsnetzwerk durch die Kommunikationsschnittstelle.

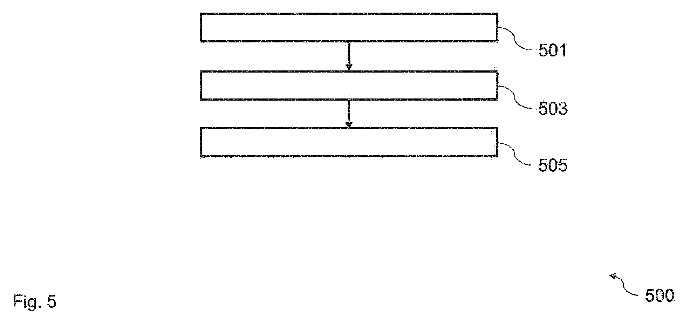

Fig. 5 zeigt ein schematisches Diagramm eines Verfahrens 500 zum Handhaben von Daten auf der Basis einer Protokollvorschrift unter Verwendung einer Netzwerkentität. Die Netzwerkentität ist ausgebildet, mit einer weiteren Netzwerkentität über ein Kommunikationsnetzwerk zu kommunizieren. Die Netzwerkentität umfasst eine Kommunikationsschnittstelle und einen Prozessor.

Das Verfahren 500 umfasst ein Empfangen 501 eines Datenpakets von der weiteren Netzwerkentität über das Kommunikationsnetzwerk durch die Kommunikationsschnittstelle, wobei das Datenpaket die Daten und ein Protokollobjekt umfasst, wobei das Protokollobjekt die Protokollvorschrift zum Handhaben der Daten anzeigt, ein Bestimmen 503 der Protokollvorschrift auf der Basis des Protokollobjekts durch den Prozessor, und ein Handhaben 505 der Daten auf der Basis der Protokollvorschrift durch den Prozessor.

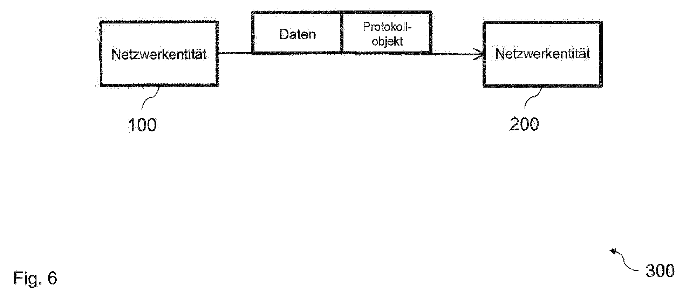

Fig. 6 zeigt ein schematisches Diagramm eines Kommunikationssystems 300 mit einer Netzwerkentität 100 und einer weiteren Netzwerkentität 200. Ein Datenpaket mit Daten und einem Protokollobjekt wird von der Netzwerkentität 100 an die weitere Netzwerkentität 200 übertragen. Mithin kann ein objektorientiertes Protokoll eingesetzt werden. Dabei kann eine Orientierung an abstrakten Objekten erfolgen.

Ein Datenpaket mit einem Protokollobjekt umfasst dabei:
i.) Daten, die übertragen werden sollen, und gleichzeitig
ii.) eine Protokollvorschrift, welche beispielsweise anzeigt, welches Netzwerkelement wie, wie lange und unter welchen Voraussetzungen die Daten nach Empfang zu handhaben hat. Ferner kann eine Autorisierung zum Handhaben der Daten angezeigt werden.

Anstatt also vorab in einer spezifizierten Protokollvorschrift, einer Spezifikation oder einer Vereinbarung zu definieren, wie die Daten des Datenpakets zu interpretieren sind und was mit den Daten nach Empfang zu geschehen hat, kann beides kombiniert und in Form eines Datenpaketes gemeinsam übertragen werden.

Nach Empfang eines Datenpaketes mit Protokollobjekt können dann beispielsweise:
i.) ein Programmcode des Protokollobjekts in einer lokalen Laufzeitumgebung der weiteren Netzwerkentität 200 zur Ausführung geladen werden, und
ii.) die Prozeduren des Programmcodes auf die Daten, die ebenfalls mit dem Datenpaket übertragen wurden, angewendet werden.

Diese Vorgehensweise hat beispielsweise den Vorteil, dass detaillierte Prozeduren nicht mehr vorab allumfassend beschreiben werden müssen. Je nach Ausführungsform der Netzwerkentität 200, beispielsweise als Netzwerkelement, können unterschiedliche Funktionen zur Verfügung stehen.

Das Protokollobjekt kann dabei auf verschiedene Weise mit bereitgestellten Funktionen der Netzwerkentität 200 interagieren.

Ein Router als Netzwerkentität 200, welcher beispielsweise nur Daten von einem physikalischen Port zu einem anderen physikalischen Port transportieren kann, könnte beispielsweise nur diese Funktion dem Protokollobjekt zur Verfügung stellen. Von welchem physikalischen Port zu welchem anderen physikalischen Port weitergeleitet oder geroutet werden würden, könnte dann beispielsweise durch den Programmcode, welcher mit dem Protokollobjekt übertragen werden kann, bestimmt werden.

Ein Sendeempfänger als Netzwerkentität 200, beispielsweise eine Base Transceiver Station (BTS), könnte beispielsweise Funktionen zur Verfügung stellen, welche ein Senden, ein Empfangen und/oder ein Speichern der Daten in einer Warteschlange erlauben. Der Programmcode, welcher neben den zu übertragenden Daten mit dem Protokollobjekt übertragen werden kann, kann in diesem Fall beispielsweise einen Programmcode umfassen, welcher eine Sende-Empfangs-Einheit und/oder die Warteschlange anspricht.

Auch andere Funktionen, beispielsweise eines Mobilfunkkommunikationsnetzwerks, wie beispielsweise die Konfiguration von Daten, welche auf Broadcastkanälen zu signalisieren sind, beispielsweise die Netzbetreiberkennung, die Zellidentifikation (engl. Cell ID), die Ortsidentifikation (engl. Location ID) und/oder Beschränkungen (engl. Restrictions), können durch ein Protokollobjekt angesprochen werden. Durch derartige Protokollobjekte können Kommunikationsnetzwerke sehr dynamisch umkonfiguriert werden.

Das Protokollobjekt kann ferner auf verschiedene Weise mit anderen Protokollobjekten interagieren.

Neben der Interaktion des Protokollobjekts mit Funktionen der Netzwerkentität 200, kann es beispielsweise vorteilhaft sein, Mechanismen im Kontext von Protokollobjekten zu definieren, welche eine Interaktion von Protokollobjekten untereinander beschreiben und/oder deren Rechte definieren.

Beispielsweise können einem Protokollobjekt eigene Funktionen zur Authentifizierung, Autorisierung und Abrechnung (engl. Authentication, Authorization, Accounting, AAA) zugewiesen werden, d.h. das Protokollobjekt kann eigene derartige Funktionen aufweisen. Ferner können einem Protokollobjekt Sicherheitsfunktionen, beispielsweise unter Verwendung einer kryptographischen Signatur, und Rechte zugewiesen sein. Um Laufzeiten und/oder Verarbeitungsverzögerungen auszugleichen, kann es zudem vorteilhaft sein, einem Datenpaket oder einem Protokollobjekt eine Gültigkeitsdauer zuzuweisen. Die Gültigkeitsdauer kann dann durch die Netzwerkentität 200 je nach Programmcode des Protokollobjekts bestimmt und berücksichtigt werden.

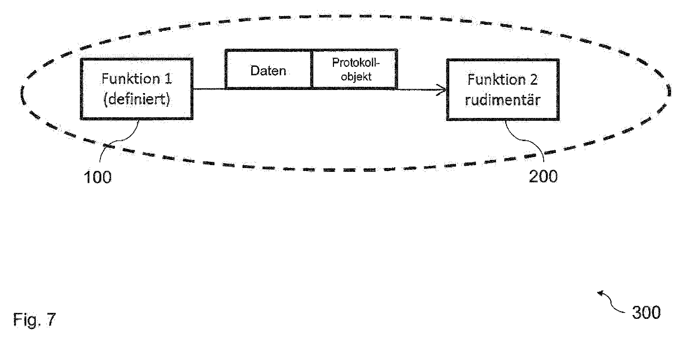

Fig. 7 zeigt ein schematisches Diagramm eines Kommunikationssystems 300 mit einer Netzwerkentität 100 und einer weiteren Netzwerkentität 200. Ein Datenpaket mit Daten und einem Protokollobjekt wird von der Netzwerkentität 100 an die weitere Netzwerkentität 200 übertragen. Die Netzwerkentität 100 stellt eine erste Funktion in definierter Form bereit. Die weitere Netzwerkentität 200 stellt eine zweite Funktion in rudimentärer Form bereit.

Das Kommunikationssystem 300 kann in einem Kommunikationsnetzwerk der fünften Generation (5G) oder einer weiteren Generation Anwendung finden. Das Übertragen eines Protokollobjektes vereinfacht dabei entscheidend die Konfiguration von Funktionen eines Subnetzwerkes, beispielsweise einer Slice, des Kommunikationsnetzwerkes sowie die Zusammensetzung des Subnetzwerkes.

So kann beispielsweise eine Funktion rudimentär, sozusagen auf Vorrat, zur Verfügung gestellt werden. Mittels des Protokollobjekts können dann beispielsweise datenverkehrsspezifischen Funktionen implementiert werden, ohne dass eine übergeordnete Instanz, wie beispielsweise ein Netzwerk-Orchestrierer, eingreifen muss. Die zweite Funktion kann ausgehend von der rudimentären Implementierung durch das Protokollobjekt realisiert werden. Auf diese Weise kann eine dynamische Funktionsanpassung, beispielsweise des Funktionsumfangs oder des Routings, an den Datenverkehr vorgenommen werden.

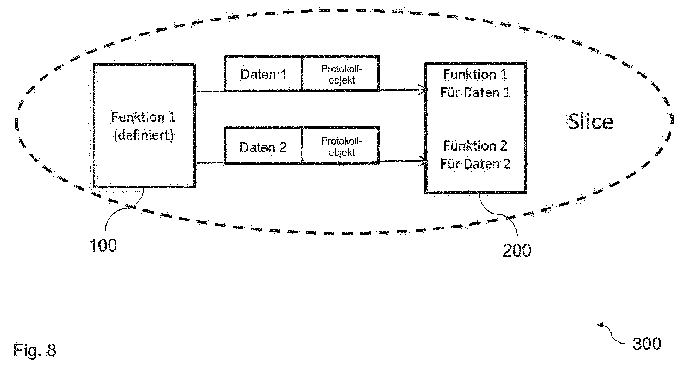

Fig. 8 zeigt ein schematisches Diagramm eines Kommunikationssystems 300 mit einer Netzwerkentität 100 und einer weiteren Netzwerkentität 200. Ein erstes Datenpaket mit ersten Daten und einem ersten Protokollobjekt wird von der Netzwerkentität 100 an die weitere Netzwerkentität 200 übertragen. Ferner wird ein zweites Datenpaket mit zweiten Daten und einem zweiten Protokollobjekt von der Netzwerkentität 100 an die weitere Netzwerkentität 200 übertragen. Die Netzwerkentität 100 stellt eine erste Funktion in definierter Form bereit. Die weitere Netzwerkentität 200 stellt eine erste Funktion für die ersten Daten und eine zweite Funktion für die zweiten Daten bereit. Das Kommunikationssystem 300 kann einem Subnetzwerk, insbesondere einem Slice, zugeordnet sein.

Ausgehend von diesem Konzept ist es beispielsweise möglich, einer Netzwerkentität innerhalb einer Slice dynamisch unterschiedliche Funktionen zuzuweisen. Auf diese Weise können beispielsweise unterschiedlichen Nutzern unterschiedliche Dienste oder unterschiedliche Dienstqualitäten innerhalb derselben Slice zugewiesen werden.

### BEZUGSZEICHENLISTE

- 100: Netzwerkentität
- 101: Prozessor
- 103: Kommunikationsschnittstelle

- 200: Netzwerkentität
- 201: Kommunikationsschnittstelle
- 203: Prozessor

- 300: Kommunikationssystem
- 301: Kommunikationsnetzwerk

- 400: Verfahren zum Kommunizieren
- 401: Bereitstellen
- 403: Erzeugen
- 405: Verknüpfen
- 407: Erzeugen
- 409: Aussenden

- 500: Verfahren zum Handhaben von Daten
- 501: Empfangen
- 503: Bestimmen
- 505: Handhaben

## Patentansprüche

1. Netzwerkentität (100) zum Kommunizieren mit einer weiteren Netzwerkentität (200) über ein Kommunikationsnetzwerk (301), mit:
einem Prozessor (101), welcher ausgebildet ist, Daten bereitzustellen und ein Protokollobjekt zu erzeugen, wobei das Protokollobjekt eine Protokollvorschrift zum Handhaben der Daten durch die weitere Netzwerkentität (200) anzeigt, wobei der Prozessor (101) ferner ausgebildet ist, die Daten mit dem Protokollobjekt zu verknüpfen, und ein Datenpaket zu erzeugen, wobei das Datenpaket die Daten und das Protokollobjekt umfasst; und
einer Kommunikationsschnittstelle (103), welche ausgebildet ist, das Datenpaket an die weitere Netzwerkentität (200) über das Kommunikationsnetzwerk (301) auszusenden.

2. Netzwerkentität (100) nach Anspruch 1, wobei das Protokollobjekt einen ausführbaren Programmcode umfasst oder durch einen ausführbaren Programmcode gebildet ist, wobei der ausführbare Programmcode durch die weitere Netzwerkentität (200) ausführbar ist, und wobei der ausführbare Programmcode die Protokollvorschrift zum Handhaben der Daten repräsentiert.

3. Netzwerkentität (100) nach einem der vorstehenden Ansprüche, wobei das Protokollobjekt ferner eine Gültigkeitsdauer des Datenpakets anzeigt, wobei die Gültigkeitsdauer einen Zeitraum zum Handhaben der Daten durch die weitere Netzwerkentität (200) anzeigt.

4. Netzwerkentität (100) nach einem der vorstehenden Ansprüche, wobei der Netzwerkentität (100) ein privater Signaturschlüssel zugeordnet ist, wobei der Prozessor (101) ausgebildet ist, das Datenpaket auf der Basis des privaten Signaturschlüssels kryptographisch zu signieren.

5. Netzwerkentität (100) nach einem der vorstehenden Ansprüche, wobei das Protokollobjekt ferner eine Autorisierung der weiteren Netzwerkentität (200) zum Handhaben der Daten durch die weitere Netzwerkentität (200) anzeigt.

6. Netzwerkentität (200) zum Handhaben von Daten auf der Basis einer Protokollvorschrift, wobei die Netzwerkentität (200) ausgebildet ist, mit einer weiteren Netzwerkentität (100) über ein Kommunikationsnetzwerk (301) zu kommunizieren, mit:
einer Kommunikationsschnittstelle (201), welche ausgebildet ist, ein Datenpaket von der weiteren Netzwerkentität (100) über das Kommunikationsnetzwerk (301) zu empfangen, wobei das Datenpaket die Daten und ein Protokollobjekt umfasst, wobei das Protokollobjekt die Protokollvorschrift zum Handhaben der Daten anzeigt; und
einem Prozessor (203), welcher ausgebildet ist, die Protokollvorschrift auf der Basis des Protokollobjekts zu bestimmen, und die Daten auf der Basis der Protokollvorschrift zu handhaben.

7. Netzwerkentität (200) nach Anspruch 6, wobei das Protokollobjekt einen ausführbaren Programmcode umfasst oder durch einen ausführbaren Programmcode gebildet ist, wobei der ausführbare Programmcode die Protokollvorschrift zum Handhaben der Daten repräsentiert, und wobei der Prozessor (203) ausgebildet ist, den ausführbaren Programmcode auszuführen.

8. Netzwerkentität (200) nach Anspruch 7, wobei die Netzwerkentität (200) ausgebildet ist, eine Laufzeitumgebung zum Ausführen des ausführbaren Programmcodes bereitzustellen, und wobei der Prozessor (203) ausgebildet ist, den ausführbaren Programmcode unter Verwendung der Laufzeitumgebung auszuführen.

9. Netzwerkentität (200) nach einem der Ansprüche 6 bis 8, wobei das Protokollobjekt ferner eine Gültigkeitsdauer des Datenpakets anzeigt, wobei die Gültigkeitsdauer einen Zeitraum zum Handhaben der Daten anzeigt, und wobei der Prozessor (203) ausgebildet ist, einen gegenwärtigen Zeitpunkt mit dem Zeitraum zu vergleichen, und die Daten zu handhaben, falls der gegenwärtige Zeitpunkt innerhalb des Zeitraumes liegt.

10. Netzwerkentität (200) nach einem der Ansprüche 6 bis 9, wobei das Datenpaket auf der Basis eines privaten Signaturschlüssels der weiteren Netzwerkentität (100) kryptographisch signiert ist, wobei der Prozessor (203) ausgebildet ist, die Signatur des Datenpakets auf der Basis eines öffentlichen Signaturprüfschlüssels der weiteren Netzwerkentität (100) zu verifizieren, wobei der private Signaturschlüssel und der öffentliche Signaturprüfschlüssel ein kryptographisches Schlüsselpaar bilden, und wobei der Prozessor (203) ausgebildet ist, die Daten zu handhaben, falls die Signatur des Datenpakets erfolgreich verifiziert ist.

11. Netzwerkentität (200) nach einem der Ansprüche 6 bis 10, wobei das Protokollobjekt ferner eine Autorisierung der Netzwerkentität (200) zum Handhaben der Daten durch die Netzwerkentität (200) anzeigt, wobei der Prozessor (203) ausgebildet ist, die Autorisierung der Netzwerkentität (200) zu verifizieren, und wobei der Prozessor (203) ferner ausgebildet ist, die Daten zu handhaben, falls die Autorisierung erfolgreich verifiziert ist.

12. Netzwerkentität (200) nach einem der Ansprüche 6 bis 11, wobei das Handhaben der Daten ein Verarbeiten der Daten oder ein Weiterleiten der Daten über das Kommunikationsnetzwerk (301) umfasst.

13. Kommunikationssystem (300), mit:
einer Netzwerkentität (100) nach einem der Ansprüche 1 bis 5; und
einer weiteren Netzwerkentität (200) nach einem der Ansprüche 6 bis 12;
wobei die Netzwerkentität (100) ausgebildet ist, mit der weiteren Netzwerkentität (200) über ein Kommunikationsnetzwerk (301) zu kommunizieren, und wobei die weitere Netzwerkentität (200) ausgebildet ist, Daten auf der Basis einer Protokollvorschrift zu handhaben.

14. Kommunikationssystem (300) nach Anspruch 13, wobei das Kommunikationsnetzwerk (301) ein Kommunikationsnetzwerk der fünften Generation (5G) oder einer weiteren Generation ist, und wobei die Netzwerkentität (100) und die weitere Netzwerkentität (200) einem Subnetzwerk, insbesondere einem Slice, des Kommunikationsnetzwerkes (301) zugeordnet sind.

15. Verfahren (400) zum Kommunizieren einer Netzwerkentität (100) mit einer weiteren Netzwerkentität (200) über ein Kommunikationsnetzwerk (301), wobei die Netzwerkentität (100) einen Prozessor (101) und eine Kommunikationsschnittstelle (103) umfasst, mit:
Bereitstellen (401) von Daten durch den Prozessor (101);
Erzeugen (403) eines Protokollobjekts durch den Prozessor (101), wobei das Protokollobjekt eine Protokollvorschrift zum Handhaben der Daten durch die weitere Netzwerkentität (200) anzeigt;
Verknüpfen (405) der Daten mit dem Protokollobjekt durch den Prozessor (101);
Erzeugen (407) eines Datenpakets durch den Prozessor (101), wobei das Datenpaket die Daten und das Protokollobjekt umfasst; und
Aussenden (409) des Datenpakets an die weitere Netzwerkentität (200) über das Kommunikationsnetzwerk (301) durch die Kommunikationsschnittstelle (103).

16. Verfahren (500) zum Handhaben von Daten auf der Basis einer Protokollvorschrift unter Verwendung einer Netzwerkentität (200), wobei die Netzwerkentität (200) ausgebildet ist, mit einer weiteren Netzwerkentität (100) über ein Kommunikationsnetzwerk (301) zu kommunizieren, und wobei die Netzwerkentität (200) eine Kommunikationsschnittstelle (201) und einen Prozessor (203) umfasst, mit:
Empfangen (501) eines Datenpakets von der weiteren Netzwerkentität (100) über das Kommunikationsnetzwerk (301) durch die Kommunikationsschnittstelle (201), wobei das Datenpaket die Daten und ein Protokollobjekt umfasst, wobei das Protokollobjekt die Protokollvorschrift zum Handhaben der Daten anzeigt;
Bestimmen (503) der Protokollvorschrift auf der Basis des Protokollobjekts durch den Prozessor (203); und
Handhaben (505) der Daten auf der Basis der Protokollvorschrift durch den Prozessor (203).

17. Computerprogramm zum Ausführen des Verfahrens (400) nach Anspruch 15 oder des Verfahrens (500) nach Anspruch 16, wenn das Computerprogramm auf einem Computer ausgeführt wird.
